# EUROPÄISCHE PATENTSCHRIFT

(11) **EP 4 293 808 B1**
(45) Veröffentlichungstag und Bekanntmachung des Hinweises auf die Patenterteilung: **16.04.2025**
(21) Anmeldenummer: 23177843.2
(22) Anmeldetag: 07.06.2023
(51) Int. Cl.: H01M 50/403, H01M 50/434, H01M 50/446, H01S 5/024

(54) **VERFAHREN UND VORRICHTUNG ZUR HERSTELLUNG EINES FESTKÖRPERSEPERATORS FÜR EINE BATTERIEZELLE**
METHOD AND DEVICE FOR PRODUCING A SOLID SEPARATOR FOR A BATTERY CELL
PROCÉDÉ ET DISPOSITIF DE FABRICATION D'UN SÉPARATEUR SOLIDE POUR UN ÉLÉMENT DE BATTERIE

(30) Priorität: 14.06.2022 DE 102022114925
(43) Veröffentlichungstag der Anmeldung: 20.12.2023
(73) Patentinhaber: PowerCo SE, 38239 Salzgitter (DE)
(72) Erfinder: Jansen, Tobias, 38106 Braunschweig (DE); Koch, Stephan Leonhard, 38239 Salzgitter (DE); Kunze, Miriam, 30926 Seelze (DE)
(74) Vertreter: Gulde & Partner

(56) Entgegenhaltungen:
- EP-A1- 3 168 914
- WO-A1-2019/007225
- US-A1- 2020 403 204

## Beschreibung

Die Erfindung betrifft ein Verfahren sowie eine Vorrichtung zur Herstellung eines Festkörperseparators für eine Batteriezelle gemäß dem Oberbegriff der unabhängigen Patentansprüche.

Wiederaufladbare elektrochemische Speichersysteme werden für viele Bereiche des täglichen Lebens immer wichtiger. Energiespeichervorrichtungen mit hoher Kapazität, wie beispielsweise Lithium-lonen(Li-lonen)-Batterien und Kondensatoren, werden in einer steigenden Anzahl von Anwendungen eingesetzt, einschließlich tragbarer Elektronik wie Mobiltelefonen oder Laptops, der Medizin- und Labortechnik, netzgekoppelter großer Energiespeicher zur Speicherung erneuerbarer Energien, einer unterbrechungsfreie Stromversorgung (USV) sowie bei Elektrofahrzeugen. Aufgrund der schnellen Marktentwicklung der Elektrofahrzeuge und der Energiespeicherung im Netz sind leistungsstarke, kostengünstige Lithium-Ionen-Batterien derzeit eine der vielversprechendsten Optionen für groß angelegte Energiespeicher.

Bei jeder dieser Anwendungen stellen die Lade-/Entladezeit und die Kapazität von Energiespeichervorrichtungen die entscheidenden Parameter dar. Darüber hinaus sind auch Größe, Gewicht und/oder Kosten solcher Energiespeichervorrichtungen wichtige Parameter. Außerdem ist ein niedriger Innenwiderstand für eine hohe Leistung erforderlich. Je geringer der Widerstand ist, desto geringer sind die Einschränkungen, denen die Energiespeichervorrichtung bei der Abgabe elektrischer Energie ausgesetzt ist. Beispielsweise wirkt sich der Innenwiderstand im Fall einer Batterie auf die Leistung aus, indem er die Gesamtmenge der Nutzenergie, die von der Batterie gespeichert wird, sowie die Fähigkeit der Batterie, hohen Strom zu liefern, reduziert. Ferner sollen Li-lonen-Batterien die angestrebte Kapazität und die gewünschte Zyklisierung am besten erreichen. Allerdings fehlen den Li-lonen-Batterien in ihrer jetzigen Form oft die Energiekapazität und die Anzahl der Lade-/Entladezyklen für diese wachsenden Anwendungen.

Eine Lithium-Ionen-Batterie besteht im Allgemeinen aus einem Separator, einer Kathode und einer Anode. Derzeit werden die Elektroden durch Dispergieren von feinen Pulvern eines aktiven Batterieelektrodenmaterials, eines leitenden Mittels und eines Bindemittels in einem geeigneten Lösungsmittel hergestellt. Die Dispersion kann auf einen Stromkollektor, zum Beispiel eine Kupfer- oder Aluminiummetallfolie, aufgetragen und dann bei erhöhter Temperatur getrocknet werden, um das Lösungsmittel zu entfernen. Die Kathoden- und Anodenblätter werden anschließend gestapelt oder gerollt, wobei der Separator die Kathode und die Anode trennt, um eine Batterie zu bilden.

Überall auf der Welt arbeiten Forschende daran, die nächste Batteriegeneration für die Elektromobilität zu entwickeln. Am vielversprechendsten sind hier Feststoffbatterien, die bereits kurz vor der Serienreife stehen und viele Vorteile für den Einsatz in Elektroautos bieten. Feststoffbatterien bieten gegenüber bekannten Lithium-Ionen-Batterien eine höhere Energiedichte, die Batterien können somit kleiner oder bei gleicher Größe leistungsstärker ausgeführt werden, bieten noch mehr Sicherheit und können schneller geladen werden.

Feststoffbatterien benötigen idealerweise keinen Kühlkreislauf, wie er bei Lithium-Ionen-Batterien mit flüssigem Elektrolyt notwendig ist. Das spart Platz und Gewicht. Sie können deutlich mehr Ladezyklen erreichen, sich nicht selbst zersetzen oder überhitzen und bieten eine homogenere Stromverteilung. Außerdem können sie mit sehr dünnen Elektrolytschichten gebaut werden, die auch noch flexibel sind.

Die Herstellung solcher Feststoffbatterien ist komplex und zeichnet sich im Bereich der Zellfertigung durch eine Vielzahl von präzisen Assemblierungsschritten aus. Durch die komplexe Produktion erhöht sich der Ausschuss stark und darüber hinaus sinkt die Robustheit des Fertigungsprozesses sowie die Sicherheit der hergestellten Batteriezelle der Feststoffbatterie. Daher kann durch eine Vereinfachung der Produktion ein ökologischeres, ökonomischeres sowie sicheres Produkt hergestellt werden. Insbesondere die Herstellung von Festkörperseparatoren ist zeitaufwendig, energieintensiv und damit teuer. In der Regel werden solche Festkörperseparatoren aus einzelnen Blättern hergestellt, wobei ein Trägermaterial mit einem Schlicker oder Pulver beschichtet wird. Anschließend wird der Verbund aus Trägermaterial und Beschichtung getrocknet und das Trägermaterial entfernt, wodurch ein Grünling des Festkörperseparators entsteht. Dieser Grünling wird anschließend in einem Sinterprozess zum fertigen Festkörperseparator weiterverarbeitet. Da die Herstellung aus einzelnen Blättern erfolgt, ist zudem ein erhöhter Handhabungsaufwand beim Beschichten, Trocknen und Sintern des Festkörperseparators notwendig.

Aus der CN 112 968 217 A1 ist ein Verfahren zur Befestigung eines positiven Elektrodenmaterials auf einem festen Elektrolyten bekannt. Nachdem das positive Elektrodenmaterial auf einen anorganischen Festelektrolyten aufgetragen wurde, wird ein selektives Laserschmelz-/Sinterverfahren auf dem anorganischen Festelektrolyten durchgeführt. Dabei bilden das positive Elektrodenmaterial und der Festelektrolyt einen engen physikalischen Kontakt durch schnelles Glühen, wodurch ein kompaktes, positives Elektrodenmaterial, das stabil mit dem Festelektrolyten verbunden ist, innerhalb einer sehr kurzen Zeit erhalten werden kann.

Die DE 10 2018 130 962 A1 offenbart ein Verfahren zur Bereitstellung eines Partikelmaterials aus einem zumindest im Wesentlichen metallischen und/oder keramischen Ausgangsmaterial, welches folgende Schritte umfasst: a) Erzeugen des Partikelmaterials aus dem Ausgangsmaterial durch Verdampfen des Ausgangsmaterials durch Eintrag von Energie in das Ausgangsmaterial und anschließendes zumindest teilweises Kondensieren des verdampften Ausgangsmaterials; b) Sammeln des Partikelmaterials in mindestens einer Aufnahme- und/oder Transporteinrichtung; c) Aufnehmen des Partikelmaterials in der Aufnahme- und/oder Transporteinrichtung derart, dass es für einen Folgeprozess verwendbar ist; und d) Bereitstellung des Partikelmaterials für den Folgeprozess.

Die DE 10 2012 217 309 A1 offenbart einen Schichtverbund für eine Batteriezelle mit einer Schicht aus Sauerstoffionen leitenden Festelektrolyten und einer nadel- oder hügelartigen Struktur aus einer keramischen, Sauerstoffionen- und Elektronen-leitenden, Transferschicht. Dabei befindet sich die nadel- oder hügelartige Struktur auf der Schicht aus Sauerstoffionenleitenden Festelektrolyten. Die nadel- oder hügelartige Struktur ist von einer Schicht aus Speicherelektroden überzogen.

Der Erfindung liegt nun die Aufgabe zugrunde, die Fertigung eines Festkörperseparators für eine Batteriezelle zu vereinfachen und die Energieeffizienz der Produktion sowie die Produktionsgeschwindigkeit zu erhöhen.

Die Aufgabe wird durch ein Verfahren zur Herstellung eines Feststoffseparators für eine Batteriezelle gelöst, welches Folgendes umfasst:
- Zuführen eines Substrats, vorzugsweise eines elektrisch leitenden Substrats,
- Auftragen eines Schlickers eines keramischen Feststoffseparators, umfassend einen Feststoffelektrolyt, einen Polymerbinder und ein Lösungsmittel, auf das Substrat,
- Trocknen des mit dem Schlicker beschichteten Substrats, wobei eine getrocknete Beschichtung ausgebildet wird, und
- Sintern der getrockneten Beschichtung des Substrats, wobei die Beschichtung durch das Einkoppeln einer energiereichen Strahlung eines Oberflächenemitters auf eine Prozesstemperatur T_{P} zum Sintern der Beschichtung erhitzt wird.

Unter einem Schlicker ist dabei ein flüssiges, breiiges bis zähflüssiges Lösungsmittel-Mineralgemisch zur Herstellung von Keramikerzeugnissen zu verstehen. Unter Trocknung ist im Rahmen dieser Patentanmeldung die vollständige oder teilweise Entfernung von Flüssigkeit aus einem feuchten Schlicker durch Verdunsten oder Verdampfen zu verstehen. Unter einem Sintern ist in diesem Zusammenhang das Erhitzen eines feinkörnigen keramischen Stoffes zu verstehen, wobei die Temperaturen des Sinterprozesses jedoch unterhalb der Schmelztemperatur der Hauptkomponenten bleiben, so dass die Form des Werkstückes bis auf eine prozessbedingte Schrumpfung erhalten bleibt. Unter einem Oberflächenemitter ist in diesem Zusammenhang eine Laserdiode zu verstehen, bei der das Licht senkrecht zur Ebene eines Halbleiterchips abgestrahlt wird, was im Gegensatz zu der strahlenförmigen Emittierung eines konventionellen Lasers steht.

Das erfindungsgemäße Verfahren ermöglicht eine besonders einfache, schnelle und kostengünstige Herstellung eines Feststoffseparators. Dabei wird der Schlicker intensiv und homogen über die gesamte Oberfläche des Substrats getrocknet und anschließend gesintert, wodurch eine besonders gleichmäßige Struktur des Feststoffseparators erreicht werden kann. Der Feststoffseparator weist eine hohe Leitfähigkeit von Lithium-Ionen auf und wird auch als Feststoffelektrolyt bezeichnet.

Durch die in den abhängigen Ansprüchen aufgeführten zusätzlichen Merkmale sind vorteilhafte Verbesserungen und Weiterentwicklungen des im unabhängigen Anspruch angegebenen Verfahrens zur Herstellung eines Separators für eine Batteriezelle möglich.

In bevorzugter Ausgestaltung der Erfindung ist vorgesehen, dass der Oberflächenemitter eine VCSEL-Matrix umfasst. Eine VCSEL-Matrix ermöglicht eine gleichmäßige Einkopplung der Energie in eine Fläche, hier die Beschichtung des Substrats, um einen gleichmäßig hohen Wärmeeintrag in die Beschichtung zu realisieren und diese zu trocken und zu sintern. Durch die Leistungssteuerung einzelner oder im Verbund liegender VCSEL-Matrix-Einheiten kann die Erwärmung statisch oder dynamisch soweit angepasst werden, dass sich eine zeitlich und räumlich homogene und stabile Temperaturtopographie an der Oberfläche der Beschichtung des Substrats ergibt.

In weiterer bevorzugter Ausgestaltung der Erfindung ist vorgesehen, dass das Substrat als Band- oder Folienmaterial zugeführt wird. Durch eine Zufuhr eines Band- oder Folienmaterials ist eine besonders einfache und kostengünstige Produktion des Separators möglich. Insbesondere ist die Verarbeitung des Substrats und des Schlickers in einem kontinuierlichen Prozess möglich, wodurch die Produktionsgeschwindigkeit des Separators erhöht werden kann, da ein manueller Handhabungsaufwand zum Beschichten des Substrats, zum Bestücken eines Trockenofens oder zum Beschicken eines Sinterofens entfallen kann.

In bevorzugter Ausgestaltung der Erfindung ist vorgesehen, dass beide Oberflächen des Substrats mit einem Schlicker beschichtet werden, sodass an beiden Oberflächen des Substrats ein keramischer Feststoffseparator ausgebildet wird. Eine beidseitige Beschichtung ist besonders vorteilhaft, da somit zwei Schichten eines Feststoffseparators gleichzeitig hergestellt werden können. Dadurch kann die Prozessgeschwindigkeit erhöht und die Produktivität bei der Herstellung des Feststoffseparators weiter verbessert werden.

Gemäß einer vorteilhaften Ausführungsform des Verfahrens ist vorgesehen, dass der Feststoffseparator stoffschlüssig mit dem Substrat verbunden wird. Eine solche stoffschlüssige Verbindung ermöglicht insbesondere bei Festkörperbatterien, bei denen die Anode in-Situ durch eine Lithiumabscheidung beim Ladevorgang gebildet wird, eine entsprechende Ausbildung eines Stromableiters an dieser Anode. Dabei erfüllt der Feststoffseparator die Funktion eines Festkörperelektrolyts und das Substrat die elektrische Anbindung der Anode.

Besonders bevorzugt ist dabei, wenn das Substrat mit der gesinterten Beschichtung nach dem Sinterprozess kurzzeitig über eine Schmelztemperatur erhitzt wird, wodurch das Substrat den Feststoffseparator zumindest partiell umklammert und/oder der Feststoffseparator von dem aufgeschmolzenen Substrat zumindest partiell eingeschlossen wird. Durch ein kurzfristiges Erhitzen über die Schmelztemperatur kann die Anbindung von dem Feststoffseparator an das Substrat verbessert werden. Insbesondere können durch ein kurzfristiges Anschmelzen die Grenzflächenwiderstände zwischen einem metallischen, elektrisch leitenden Substrat und dem Feststoffseparator verringert werden. Zudem können durch das kurzfristige Anschmelzen Eigenspannungen in dem Substrat und/oder der gesinterten Beschichtung abgebaut werden, um die Haltbarkeit des Separators zu verbessern und die Gefahr einer mechanischen oder thermischen Schädigung des Separators im späteren Betrieb der Batterie zu verringern. Ferner kann durch ein partielles Aufschmelzen des Substrates eine mechanische Verklammerung zwischen dem Feststoffseparator und dem Substrat ausgebildet werden. Alternativ oder zusätzlich kann der Feststoffseparator von dem aufgeschmolzenen Substrat zumindest partiell eingeschlossen werden. Dadurch kann eine besonders feste Verbindung zwischen dem Substrat und dem Feststoffseparator ausgebildet werden.

In einer vorteilhaften Ausgestaltung des Verfahrens ist vorgesehen, dass ein Trocknungsprozess, ein Sinterprozess und/oder ein Abkühlprozess des Feststoffseparators unter einer Prozessatmosphäre erfolgen. Durch eine Prozessatmosphäre können unerwünschte chemische Nebenreaktionen beim Trocknen, Sintern und/oder Abkühlen des Feststoffseparators vermieden werden. Dadurch kann die Energiedichte der Festkörperbatterie gesteigert und die Empfindlichkeit gegen eine mechanische Beschädigung, insbesondere einen Bruch des Feststoffseparators, verringert werden.

Besonders bevorzugt ist dabei, wenn zum Trocknen des beschichteten Substrats eine induktive Erwärmung des Substrats und zusätzlich eine Zufuhr von trockener Luft und/oder einem Prozessgas erfolgt. Dabei wird im Prozessraum eine Atmosphäre geschaffen, welche weitgehend frei von Wasserdampf ist, um Nebenreaktionen beim Trocknen und Sintern des Schlickers zu vermeiden. Unter einer Atmosphäre, welche weitgehend frei von Wasser ist, ist dabei eine Atmosphäre mit einem Taupunkt von weniger als -20°C, vorzugsweise von weniger als -40°C, besonders bevorzugt von weniger als -65°C zu verstehen. Alternativ oder zusätzlich kann die Atmosphäre auch Prozessgase, insbesondere inerte Gase wie Stickstoff umfassen, welche eine Reaktion von Wasserdampf mit dem Schlicker beim Temperprozess unterbinden. Alternativ können auch reaktive Prozessgase eingesetzt werden, welche ein Diffusionsgleichgewicht herstellen und ein Herausdiffundieren des Lithiums aus dem Schlicker verhindern.

In einer vorteilhaften Ausgestaltung des Verfahrens ist vorgesehen, dass das beschichtete Substrat mittels eines Oberflächenemitters getrocknet wird. Durch Trocken und Sintern des Substrats mit Oberflächenemittern kann der Herstellungsprozess besonders einfach gesteuert werden. Alternativ kann das Trocknen auch durch eine andere bekannte Technologie, insbesondere durch einen Trocknungsofen, erfolgen.

Gemäß einer vorteilhaften Ausgestaltung des Verfahrens ist vorgesehen, dass das Trocknen bei einer Beharrungstemperatur unterhalb einer Sintertemperatur des Schlickers erfolgt. Dadurch kann bei der Trocknung die Porosität eines Grünlings, das heißt des beschichteten Substrats vor dem Sinterprozess, eingestellt werden, um die gewünschten mechanischen und elektrochemischen Eigenschaften zu erreichen.

In einer bevorzugten Ausführungsform des Verfahrens ist vorgesehen, dass eine Schichtdicke der getrockneten Beschichtung in einem Bereich von 0,1 µm bis 50 µm, vorzugsweise von 1 µm bis 20 µm, besonders bevorzugt von 2 µm bis 10 µm liegt. Dadurch kann eine dünne, aber mechanisch hinreichend stabile und elektrisch hinreichend isolierende Separatorschicht ausgebildet werden. Eine dünne Separatorschicht ermöglicht bei gleichem Bauraum eine dichtere Stapelung des Zellstapels, wodurch die Leistungsdichte der Festkörperbatterie erhöht werden kann.

In einer weiteren vorteilhaften Ausgestaltung des Verfahrens ist vorgesehen, dass eine Wellenlänge der Strahlung des Oberflächenemitters im Bereich von 10 nm bis 20000 nm, bevorzugt im Bereich von 10 nm bis 1800 nm, besonders bevorzugt von 100 nm bis 1600 nm, insbesondere im Bereich von 300 nm bis 1500 nm, liegt.

Die Wellenlänge ist abhängig vom Typ des Oberflächenemitters und des Feststoffelektrolyten. Eine Wellenlänge von 10nm bis 1800 nm ist dabei besonders günstig, um den Schlicker auf dem Substrat zu trocknen und die getrocknete Beschichtung zu sintern. Bei einem Oberflächenemitter mit dieser Wellenlänge absorbiert die getrocknete Beschichtung die Energie besonders gut, sodass die Energie des Oberflächenemitters besonders effizient in die Beschichtung des Substrates eingekoppelt werden kann. Dadurch ist ein besonders effizienter Sinterprozess möglich.

In einer bevorzugten Ausgestaltung der Erfindung ist vorgesehen, dass das metallische, elektrisch leitende Substrat eine Kupferfolie, eine Nickelfolie oder eine Verbundfolie aus zwei oder mehr metallischen Schichten, insbesondere eine mit Nickel beschichtete Kupferfolie, ist. Kupfer- und Nickelfolien sind besonders geeignet, da sie einen Schmelzpunkt haben, welcher höher als die Sintertemperatur des Schlickers beziehungsweise der getrockneten Beschichtung des Substrats ist. Dadurch wird verhindert, dass das Substrat beim Sinterprozess selbst schmilzt und die getrocknete Beschichtung nicht hinreichend durch das Substrat gestützt wird.

Da Kupfer eine höhere thermische und elektrische Leitfähigkeit aufweist als Nickel, ist Kupfer als elektrisch leitendes Substrat prinzipiell bevorzugt. Jedoch kann es aufgrund der unterschiedlichen Morphologie von Nickel und Kupfer vorteilhaft sein, eine Kupferfolie mit Nickel zu beschichten, um die Vorteile beider Werkstoffe zu kombinieren.

In einer bevorzugten Ausführungsform des Verfahrens ist vorgesehen, dass der Schlicker des Feststoffseparators ein kristallines Elektrolyt mit einer hohen Leitfähigkeit für Lithium-Ionen ist.

Besonders bevorzugt ist dabei, wenn der Schlicker des Feststoffseparators ein oxidisches, ionenleitendes Material, vorzugsweise eine oxidische, Lithium-Ionen-leitende Keramik oder Glaskeramik, insbesondere Lithium-Lanthan-Zirkoniumoxid (LLZO), ein Lithium-Aluminium-Titanphosphat, ein Lithium-Lanthan-Titanat oder ein Derivat umfasst. Lithium-Lanthan-Zirkoniumoxid bietet gegenüber elementarem Lithium den Vorteil, dass es chemisch und mechanisch besonders stabil ist.

In einer bevorzugten Ausgestaltung des Verfahrens ist vorgesehen, dass der Feststoffseparator eine NASICON-Struktur aufweist. Geeignete Lithium-analoge Strukturen von NASICON umfassen insbesondere Lithiumphosphate der Formel LiM₂(PO₄)₃, wobei M für ein Basiselement ausgewählt aus der Gruppe Ti, Ge, Zr, Hf oder Sn steht. Zur Steigerung der Ionenleitfähigkeit können die Lithiumphosphate dotiert werden, wobei als Dotand vorzugsweise Al, Cr, Ga, Fe, Sc, In, Lu, Y und La dienen. Besonders bevorzugt sind LiZr₂(PO₄)₃ (LZP) dotiert mit La, Ti oder Al; LiTi₂(PO₄)₃ (LTP); Li₁₊ₓAlₓTi₂₋ₓ(PO₄)₃ mit x = 0,3 - 0,5 (LATP) Li₁₊ₓAlₓGe_{2- x}(PO₄)₃ mit x = 0,4 - 0,5 (LAGP) und Li_{1.4}Al_{0.4}Ge_{0.2}Ti_{1.6}(PO₄)₃ LAGTP.

In einer weiteren bevorzugten Ausgestaltung des Verfahrens ist vorgesehen, dass der Feststoffseparator eine LISICON-Struktur aufweist. LISICON ist ein Akronym für Lithium Super Ionic Conductor und bezog sich ursprünglich auf eine Familie von Mineralien mit der chemischen Formel Li₂₊₂ₓZn₁₋ₓGeO₄.Auch Feststoffseparatoren mit einer LISICON-Struktur ermöglichen eine zusätzliche Aufnahme von Lithium und können dieses Lithium für die Funktion in der Batteriezelle einer Feststoffbatterie zur Verfügung stellen.

In einer weiteren bevorzugten Ausgestaltung des Verfahrens ist vorgesehen, dass der Feststoffseparator eine Granat-Struktur aufweist. Granate sind strukturell betrachtet Orthosilikate der allgemeinen Zusammensetzung X₃Y₂(SiO₄)₃, die im kubischen Kristallsystem kristallisieren, wobei X und Y achtfach bzw. sechsfach koordinierte Kationenstellen darstellen. Die einzelnen SiO₄-Tetraeder sind miteinander durch ionische Bindungen über die interstitiellen B-Kationen verbunden. Granatartige Verbindungen mit einem Lithiumüberschuss sind gute Lithiumionenleiter. Besonders geeignete Beispiele für Ionenleiter mit granatartiger Struktur ist Lithium-Lanthan-Zirkoniumoxid Li₇La₃Zr₂O₁₂ (LLZO) und Lithium-Lanthan-Zirkoniumtitanat Li_{6.6}La₃Zr_{1.6}Ta_{0.4}O₁₂.

In einer weiteren bevorzugten Ausgestaltung des Verfahrens ist vorgesehen, dass der Feststoffseparator eine Argyrodit-Struktur aufweist. Argyrodit ist ein Mineral mit einem orthorhombischen Kristallsystem der chemischen Zusammensetzung Ag₈GeS₆. Der Begriff wird vorliegend für Lithiumionenleiter verwendet, die ein vergleichbares Kristallsystem aufweisen. Beispiele umfassen Li₇₋ₓZCh₆₋ₓXₓ mit x = 0 bis 1, Z = P oder As, Ch = S oder Se und X = Cl, Br oder I. Besonders bevorzugt sind die Li-Argyrodite Li₆PS₅X (X= Cl, Br and I), Li₇PS₆ und Li₇PSe₆ und Li_{6.6}P_{0.4}Ge_{0.6}S₅I. Auch in dieses Kristallsystem lässt sich zusätzliches Lithium aufnehmen, welches dann beim Laden einer Batteriezelle mit einem solchen Elektrolyt zur Abscheidung einer Anode freigesetzt werden kann.

In einer weiteren bevorzugten Ausgestaltung des Verfahrens ist vorgesehen, dass der Feststoffseparator eine Perowskit-Struktur aufweist. Ein besonders geeigneter Vertreter der Perowskite ist Lithiumlanthantitanat (LLTO), wobei Leerstellen in der Perowskit-Struktur die hohe Leitfähigkeit ermöglichen.

Alternativ ist mit Vorteil vorgesehen, dass der Feststoffelektrolyt ein sulfidischer Feststoffelektrolyt ist. Hohe lonenleitfähigkeiten lassen sich auch mit sulfidischen Feststoffelektrolyten mit einem von den vorgenannten Strukturtypen abweichenden Aufbau erreichen. Ein Beispiel ist der Ionenleiter Li₁₀GeP₂S₁₂ (LGPS) und hiervon abgeleitete Ionenleiter mit LGPS-Struktur, wie Li₁₀SiP₂S₁₂. Ferner können den LISICON strukturell vergleichbare Minerale mit abweichender chemischer Zusammensetzung verwendet werden, bei denen Sauerstoff durch Schwefel ersetzt ist (thio-LISICON). Geeignete schwefelbasierte Feststoffelektrolyte umfassen beispielsweise Li₂S-P₂S₅-X-Systeme (mit X = SiS₂, GeS₂, Lil, P₂S₃, P₂Se₅, P₂O₅ oder ohne Zusatz).

Ein weiteres Beispiel für einen schwefelbasierten Feststoffelektrolyten ist β-Li₃PS₄. Ferner eignen sich auch insbesondere binäre sulfidische Gläser, wie Li₂S-P₂S₅, Li₂S-SiS₂ und Li₂S-GeS₂ für den Einsatz als Feststoffelektrolyt. Beispiele umfassen 77.5Li₂S-22.5P₂S₅, LiI-Li₂S-P₂S₅, 80Li₂S-20P₂S₅ und 70Li₂S-29P₂S₅-1P₂O₅.

In einer vorteilhaften Ausführung des Verfahrens ist vorgesehen, dass das Substrat mit der gesinterten Beschichtung als Bandmaterial abgeführt wird. Dadurch ist eine besonders einfache Prozessführung beim Beschichten, Trocknen und Sintern möglich, wobei das Substrat mit der gesinterten Beschichtung auf eine Aufnahmevorrichtung, insbesondere eine Rolle, eine Hülse oder eine Trommel aufgewickelt werden kann, um auf einfache Art und Weise einem weiteren Fertigungsschritt bei der Herstellung der Batterie zugeführt werden zu können. Alternativ kann das gesinterte Substrat auch nach dem Sinterprozess in die Form der gewünschten Separatoren geschnitten werden und als stapelbares Stückgut einem nächsten Prozessschritt bei der Herstellung der Batterie zugeführt werden.

Ein weiterer Teilaspekt der Erfindung betrifft eine Vorrichtung zur Herstellung eines solchen Feststoffseparators für eine Batteriezelle. Die Vorrichtung umfasst Mittel zum Zuführen eines Substrats, insbesondere eine elektrisch leitenden Substrats, Mittel zum Auftragen eines Schlickers eines Feststoffseparators auf das Substrat, Mittel zum Trocknen des mit dem Schlicker beschichteten Substrats, wobei eine getrocknete Beschichtung ausgebildet wird und Mittel zum Sintern der getrockneten Beschichtung des Substrats, wobei die Mittel zum Sintern mindestens einen Oberflächenemitter zum Aufheizen der getrockneten Beschichtung auf eine Prozesstemperatur T_{P} zum Sintern der Beschichtung aufweisen.

In einer vorteilhaften Weiterentwicklung der Vorrichtung ist vorgesehen, dass die Mittel zum Trocknen und/oder Sintern der Beschichtung des Substrats mehrere hintereinander geschaltete Oberflächenemitter umfassen. Dadurch ist eine besonders einfache Steuerung der Temperatur in der Beschichtung möglich. Zudem kann es bei einem kontinuierlich ablaufenden Prozess notwendig sein, mehrere Oberflächenemitter zu nutzen, um die getrocknete Beschichtung hinreichend lang zu erhitzen, um den Sinterprozess abzuschließen.

In einer weiteren Verbesserung der Vorrichtung ist vorgesehen, dass die Mittel zum Trocknen und/oder Sintern der Beschichtung des Substrats mehrere Oberflächenemitter umfassen, wobei zumindest zwei der Oberflächenemitter an unterschiedlichen Seiten des Substrats angeordnet sind. Dadurch ist ein gleichmäßiger Wärmeeintrag in das Substrat möglich. Dies ermöglicht eine sehr gleichmäßige Trocknung, wodurch sich ein im Wesentlichen homogenes Gefüge des beschichteten und getrockneten Substrats einstellt. Des Weiteren ermöglicht eine beidseitige Erwärmung eine Migration des Bindungsmittels aus der Mitte des Schlickers heraus an die Oberfläche, wodurch die elektrochemischen Eigenschaften des Separators verbessert werden können.

In einer vorteilhaften Ausgestaltung der Vorrichtung ist vorgesehen, dass die Mittel zum Auftragen des Schlickers auf das Substrat eine Schlitzdüse umfassen. Durch eine Schlitzdüse ist ein besonders schonendes und kraftfreies Auftragen des Schlickers auf das Substrat möglich. Dadurch wird die Belastung für das Substrat reduziert.

Alternativ oder zusätzlich ist mit Vorteil vorgesehen, dass die Mittel zum Auftragen des Schlickers eine Rolle zur Beschichtung des Substrats erfassen. Das Aufbringen des Schlickers auf das Substrat mit einer Rolle ermöglicht auf besonders einfache und kostengünstige Art und Weise eine Beschichtung des Substrats.

Besonders bevorzugt ist dabei, wenn die Mittel zum Auftragen zwei gegenläufige Beschichtungsrollen aufweisen, welche auf zumindest einer Oberfläche des Substrats, vorzugsweise auf zwei Oberflächen des Substrats, einen Schlicker auftragen. Durch zwei gegenläufige Rollen ist ein besonders gleichmäßiges Auftragen einer dünnen Schicht des Schlickers auf das Substrat möglich.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein bevorzugtes Ausführungsbeispiel für eine erfindungsgemäße Vorrichtung zur Herstellung eines Feststoffseparators für eine Batteriezelle;
- Figur 2: ein weiteres bevorzugtes Ausführungsbeispiel für eine erfindungsgemäße Vorrichtung zur Herstellung eines Feststoffseparators für eine Batteriezelle;
- Figur 3: ein mit einem Feststoffseparator beschichtetes Substrat zur Trocknung und Sinterung durch einen Oberflächenemitter; und
- Figur 4: ein Ablaufdiagramm zur Durchführung eines erfindungsgemäßen Verfahrens zur Herstellung eines Feststoffseparators für eine Batteriezelle.

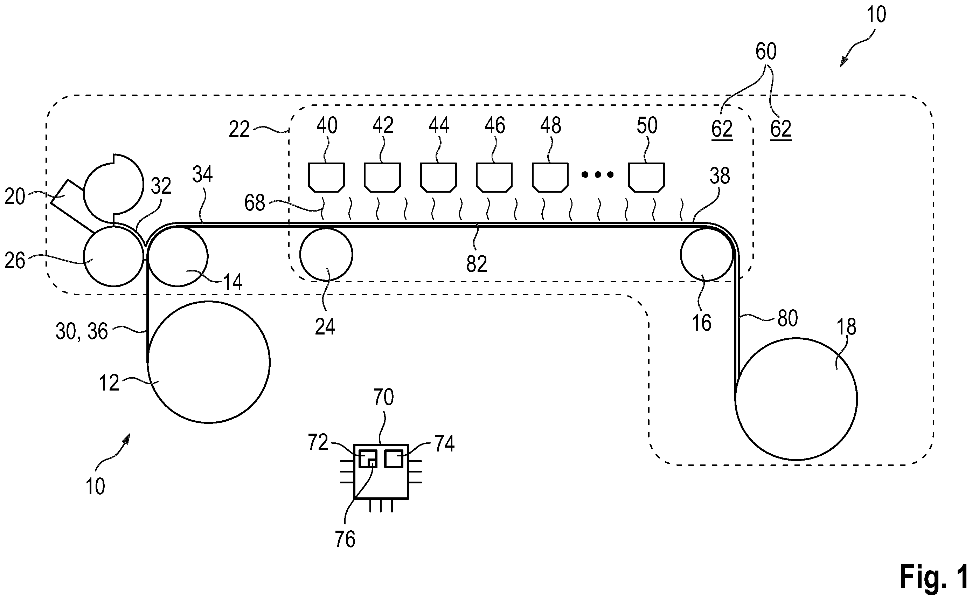

Figur 1 zeigt eine Vorrichtung 10 zur Herstellung eines Feststoffseparators 80 für eine Batteriezelle. Die Vorrichtung 10 umfasst Mittel 12, 14 zum Zuführen eines metallischen, elektrisch leitenden Substrats 30, welche eine erste Aufnahmevorrichtung 12, insbesondere eine Rolle, einen Dorn auf einer Spannhülse oder eine Trommel, umfassen, auf welcher das metallische, elektrisch leitende Substrat 30 in Form eines Band- oder Folienmaterials 36 aufgewickelt ist und den weiteren Komponenten der Vorrichtung 10 zugeführt wird. Die Mittel zum Zuführen umfassen ferner eine erste Umlenkrolle 14, mit welcher das metallische, elektrisch leitende Substrat umgelenkt und einer Heizzone 22 zum Trocknen und nachfolgenden Sintern zugeführt wird.

Die Vorrichtung 10 umfasst ferner Mittel 20 zum Auftragen eines Schlickers 32 eines Feststoffseparators auf das metallische, elektrisch leitende Substrat 30. Dazu ist eine erste Auftragungseinheit 20 vorgesehen, um einen Schlicker 32 eines Feststoffseparators auf einer ersten Seite des metallischen, elektrisch leitenden Substrats 30 aufzutragen. Die Auftragungseinheit 20 weist ein Paar gegenläufiger Rollen 26 auf, welche das Substrat 30 an einer Oberfläche mit dem Schlicker 32 beschichten. Der Schlicker 32 des Feststoffseparators umfasst ein Lösungsmittel, einen Feststoffelektrolyten sowie einen Polymerbinder. Das Substrat 30 ist insbesondere eine Kupferfolie, eine Nickelfolie oder eine Verbundfolie, welche eine Kupferfolie und/oder eine Nickelfolie sowie zusätzlich weitere metallische Schichten umfasst. Alternativ zu den gegenläufigen Rollen 26 kann der Schlicker 32 auch auf andere Art und Weise, insbesondere durch eine oder mehrere Schlitzdüsen auf das Substrat 30 aufgebracht werden.

Die Vorrichtung 10 umfasst ferner Mittel 40, 42, 44 zum Trocknen des beschichteten Substrats 34. Die Mittel umfassen eine Trocknungseinheit, welche ein oder mehrere Oberflächenemitter 40, 42, 44 umfasst. Die Trocknungseinheit kann zusätzlich eine oder vorzugsweise mehrere Prozessgasdüsen 52, 54 umfassen, mit welchen trockene Luft oder ein Prozessgas in die Trocknungseinheit eingeblasen wird. Die Oberflächenemitter 40, 42, 44 sind in diesem Ausführungsbeispiel auf der dem Schlicker 32 zugewandten Seite des beschichteten Substrats 34 angeordnet. Die Oberflächenemitter 40, 42, 44 umfassen jeweils eine Lasereinheit 64, welche eine VCSEL-Matrix 66 ausbildet und somit eine Einkopplung einer energiereichen Laserstrahlung 68 in die Beschichtung des Substrats 30 ermöglicht.

Die Vorrichtung 10 umfasst ferner Mittel 46, 48, 50 zum Sintern der getrockneten Beschichtung 82 des Substrats 30, insbesondere eine Sintereinheit, welche sich in Prozessrichtung an die Mittel 40, 42, 44 zum Trocknen des beschichteten Substrats 34 anschließen. Dabei umfassen die Mittel zum Sintern 46, 48, 50 insbesondere weitere Oberflächenemitter 46, 48, 50, welche ebenfalls auf der der Beschichtung 82 zugewandten Seite des Substrats 30 angeordnet sind.

Die Mittel zum Sintern 46, 48, 50 sind insbesondere dazu eingerichtet, die Temperatur des getrockneten, beschichteten Substrats 34 ausgehend von einer Beharrungstemperatur T_{B} zum Trocknen weiter auf eine Sintertemperatur T_{S} von vorzugsweise 1000°C bis 1200°C aufzuheizen. In der Sintereinheit können weitere Prozessgasdüsen 56, 58 angeordnet sein, um auch der Sintereinheit trockene Luft oder ein Prozessgas zur Optimierung des Sinterprozesses zuzuführen. Die Mittel zum Sintern 46, 48, 50 können ferner dazu eingerichtet sein, das Substrat 30 mit der gesinterte Beschichtung 38 nach dem Sintern kurzfristig auf eine Temperatur T_{L} oberhalb der Sintertemperatur, insbesondere auf eine Temperatur von mehr als 1200°C zu erhitzen, um kurzfristig ein Anschmelzen an der Verbindungsstelle zwischen dem metallischen, elektrisch leitenden Substrat 30 und der gesinterten Beschichtung 38 zu bewirken, wodurch Eigenspannungen in dem gesinterten Substrat 38 verringert und der Übergangswiderstand zwischen dem metallischen, elektrisch leitenden Substrat 30 und dem Feststoffseparator 80 reduziert werden können. Die Mittel zum Sintern 46, 48, 50 sind ebenfalls als Oberflächenemitter 46, 48, 50 ausgebildet und umfassen jeweils eine Lasereinheit 64, welche eine VCSEL-Matrix 66 ausbildet und somit eine Einkopplung einer energiereichen Laserstrahlung 68 in die getrocknete Beschichtung 82 des Substrats 30 ermöglicht, um diese Beschichtung 82 zu sintern.

Die Mittel zum Trocknen 40, 42, 44 und die Mittel zum Sintern 46, 48, 50 können in einer gemeinsamen Heizzone 22 angeordnet sein, welche einen Prozessraum 60 ausbildet, der von einem Prozessgas geflutet ist und in dem durch das Prozessgas eine Prozessatmosphäre 62 ausgebildet ist. Ferner kann in der Heizzone 22 eine Stützrolle 24 angeordnet sein, um das Substrat 30 beim Trocknen und/oder Sintern zu stützen.

Die Vorrichtung 10 umfasst ferner eine zweite Umlenkrolle 16, mit welcher der Feststoffseparator 80 aus der Heizzone 22 herausgeführt und einer zweiten Aufnahmevorrichtung 18, insbesondere einer weiteren Rolle, einer Trommel oder einer Hülse auf einem Spanndorn zugeführt wird, auf welcher das Substrat 30 mit der gesinterten Beschichtung 38 zur Weiterverarbeitung aufgerollt werden kann.

Die Vorrichtung 10 umfasst ferner ein Steuergerät 70 mit einer Speichereinheit 72 und einer Recheneinheit 74. In der Speichereinheit 72 ist ein maschinenlesbarer Programmcode 76 zur Steuerung der Vorrichtung und zur Ausführung eines erfindungsgemäßen Verfahrens abgelegt. Dabei ist das Steuergerät 70 dazu eingerichtet, ein erfindungsgemäßes Verfahren zur Herstellung eines Feststoffseparators 80 mit der beschriebenen Vorrichtung 10 auszuführen, wenn der maschinenlesbare Programmcode 76 durch die Recheneinheit 74 ausgeführt wird.

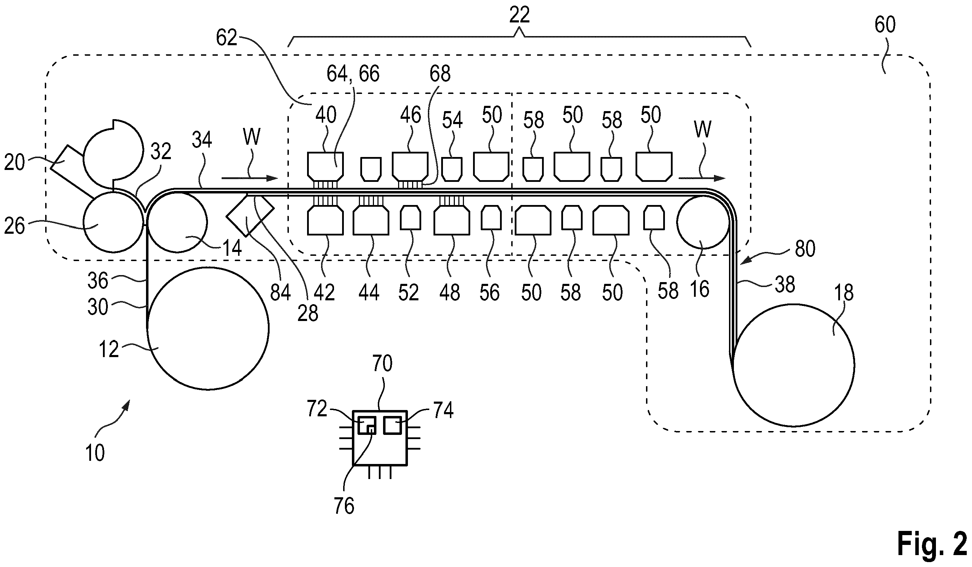

In Figur 2 ist ein weiteres Ausführungsbeispiel für eine Vorrichtung 10 zur Herstellung eines Feststoffseparators 80 dargestellt. Bei im Wesentlichen gleichem Aufbau wie zu Figur 1 ausgeführt, wird in diesem Ausführungsbeispiel das Substrat 30 von beiden Seiten mit einem Schlicker 32 beschichtet. Dazu weist die Vorrichtung 10 Mittel 20, 84 zum Auftragen eines Schlickers 32 eines Feststoffseparators auf das metallische, elektrisch leitende Substrat 30 auf. An einer ersten Oberfläche des Substrats 30 ist eine erste Auftragungseinheit 20 vorgesehen, um einen Schlicker 32 eines Feststoffseparators auf einer ersten Seite des metallischen, elektrisch leitenden Substrats 30 aufzutragen. Die Mittel 20 zum Auftragen eines Schlickers 32 umfassen ferner eine zweite Auftragungseinheit 84, um den Schlicker 32 des Feststoffseparators auf eine zweite Seite des metallischen, elektrisch leitenden Substrats 30 aufzutragen. Die Vorrichtung 10 umfasst ferner Mittel 40, 42, 44, 46, 48, 50, 64, 66 zum Trocknen und Sintern des beschichteten Substrats 34. Die Oberflächenemitter 40, 42, 44, 46, 48, 50 sind vorzugsweise auf beiden Seiten des durch die Trocknungseinheit geführten beschichteten Substrats 34, also oberhalb und unterhalb des beschichteten Substrats 34 angeordnet. Besonders bevorzugt sind in Prozessrichtung durch die Trocknungseinheit und die Sintereinheit auf beiden Seiten des beschichteten Substrats 34 jeweils abwechselnd Oberflächenemitter 40, 42, 44, 46, 48, 50 zum Aufheizen der Beschichtung 82 und Prozessgasdüsen 52, 54, 56, 58 zum Einblasen von trockener Luft oder einem Prozessgas angeordnet.

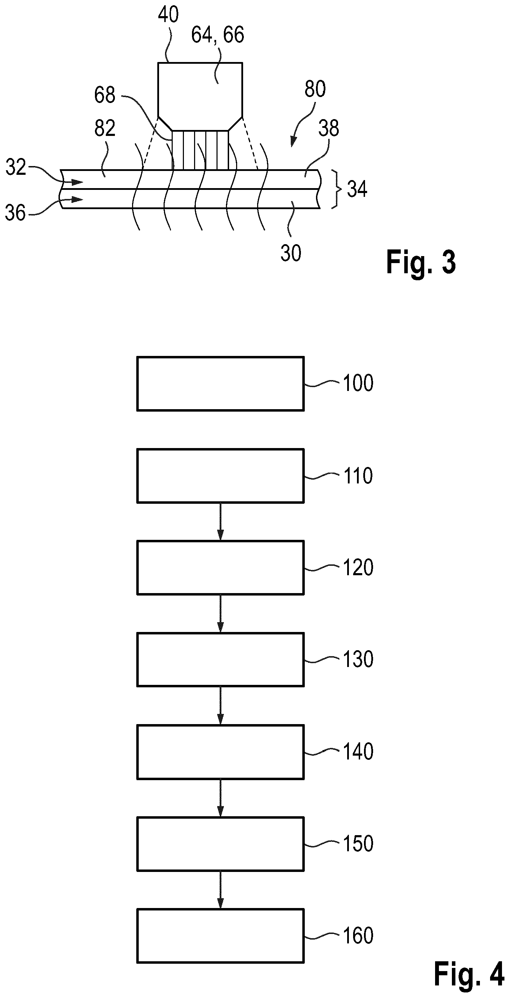

Figur 3 zeigt ein mit einem Schlicker 32 beschichtetes Substrat 34 in einem Trocknungs- und einem nachgeschalteten Sinterprozess. Dabei ist vorzugsweise ein metallisches, elektrisch leitendes Substrat 30, bevorzugt eine Folie 36, insbesondere ein Kupferfolie oder eine Nickelfolie oder eine Verbundfolie, welche eine Kupferfolie und/oder eine Nickelfolie sowie zusätzlich weitere metallische Schichten umfasst, zumindest auf einer Seite mit einem Schlicker 32 eines Feststoffseparators beschichtet. Dabei ist auf dem Schlicker 32 beziehungsweise einer aus dem Schlicker 32 gebildeten Beschichtung 82 ein Oberflächenemitter 40, insbesondere eine Lasereinheit 64 mit einer VSCEL-Matrix 66 zur Emittierung von energiereicher Laserstrahlung 68 angeordnet, um das metallische, elektrisch leitende Substrat 30 durch die Laserstrahlung 68 zu erhitzen und den Schlicker 32 zu trocknen. Auf diese Art und Weise wird die Beschichtung 82 auf dem Substrat 30 getrocknet, welche in einem darauffolgenden Prozessschritt durch einen in Figur 1 oder Figur 2 dargestellten weiteren Oberflächenemitter 42, 44, 46, 48, 50 erhitzt und gesintert wird, sodass ein gesinterte Beschichtung 38 auf dem Substrat 30 entsteht, welches stoffschlüssig mit dem metallischen, elektrisch leitenden Substrat 30 verbunden sein kann.

Figur 4 zeigt ein Ablaufdiagramm zur Durchführung eines erfindungsgemäßen Verfahrens zur Herstellung eines Feststoffseparators 80 für eine Batteriezelle. In einem ersten Verfahrensschritt <100> wird ein vorzugsweise metallisches, elektrisch leitendes Substrat 30 einem Beschichtungsprozess zugeführt. Dies erfolgt vorzugsweise in Form eines Bandmaterials, welches von einer ersten Aufnahmevorrichtung 12, insbesondere einer Rolle, der Vorrichtung 10 abgewickelt wird. In einem Verfahrensschritt <110> wird ein Schlicker 32 eines Feststoffseparators auf eine erste Seite des Substrats 30 mithilfe einer ersten Auftragungseinheit 20 aufgetragen. Anschließend kann in einem Verfahrensschritt <120> ein weiterer Schlicker 32 eines Feststoffseparators auf eine zweite Seite des Substrats 30 mithilfe einer zweiten Auftragungseinheit 84 aufgetragen werden. Das Auftragen des Schlickers 32 auf die beiden Seiten des Substrats 30 kann auch parallel erfolgen. In einer vereinfachten Ausführungsform des Verfahrens kann das Substrat 30 auch nur auf einer Seite mit einem Schlicker beschichtet werden, sodass einer der Verfahrensschritte <110> oder <120> entfallen kann.

In einem Verfahrensschritt <130> wird das mit dem Schlicker 32 beschichtete Substrat 34 einer Heizzone 22 zugeführt, welche eine Trocknungseinheit und eine Sintereinheit umfasst. Die Trocknungseinheit und die Sintereinheit sind vorzugsweise zusammen in einem gemeinsamen Gehäuse angeordnet, sodass das beschichtete Substrat 34 kontinuierlich zunächst in einem Verfahrensschritt <140> durch die Strahlung 68 des Oberflächenemitters 40, 42, 44, 46, 48, 50, 64, 66 das Substrat 30 erhitzt und die Beschichtung 82 des Substrats 30 dabei getrocknet wird. In einem sich an die Trocknung anschließenden Verfahrensschritt <150> wird das beschichtete Substrat 34 gesintert, indem das Substrat 30 und die getrocknete Beschichtung 82 des Schlickers 32 durch den oder die Oberflächenemitter 40, 42, 44, 46, 48, 50, 64, 66 erhitzt werden, sodass eine mechanisch stabile gesinterte Beschichtung 38 des Substrats 30 entsteht.

In einem weiteren Verfahrensschritt <160> kann das Substrat 30 kurzfristig über eine Schmelztemperatur erhitzt werden, wodurch es im Verbindungsbereich zwischen dem Substrat 30 und der gesinterten Beschichtung 38 zu einem Anschmelzen kommt, wodurch die Übergangswiderstände sowie die Eigenspannungen reduziert werden können. Dadurch kann sowohl die mechanische Festigkeit als auch die thermische Stabilität des Feststoffseparators 80 erhöht werden.

### Bezugszeichenliste

- 10: Vorrichtung
- 12: erste Aufnahmevorrichtung
- 14: erste Umlenkrolle
- 16: zweite Umlenkrolle
- 18: zweite Aufnahmevorrichtung

- 20: erste Auftragungseinheit
- 22: Heizzone
- 24: Stützrolle
- 26: gegenläufige Rollen
- 28: Schlitzdüse

- 30: Substrat
- 32: Schlicker
- 34: beschichtetes Substrat
- 36: Folie
- 38: gesinterte Beschichtung

- 40: erster Emitter
- 42: zweiter Emitter
- 44: dritter Emitter
- 46: vierter Emitter
- 48: fünfter Emitter

- 50: weiterer Emitter
- 52: erste Prozessgasdüse
- 54: zweite Prozessgasdüse
- 56: dritte Prozessgasdüse
- 58: weitere Prozessgasdüse

- 60: Prozessraum
- 62: Prozessatmosphäre
- 64: Lasereinheit
- 66: VCSEL-Matrix
- 68: Laserstrahlung

- 70: Steuergerät
- 72: Speichereinheit
- 74: Recheneinheit
- 76: maschinenlesbarer Programmcode

- 80: Feststoffseparator
- 82: getrocknete Beschichtung
- 84: zweite Auftragungseinheit

## Patentansprüche

1. Verfahren zur Herstellung eines Feststoffseparators (80) für eine Batteriezelle, umfassend:
- Zuführen eines Substrats (30),
- Auftragen eines Schlickers (32) eines keramischen Feststoffseparators, umfassend einen Feststoffelektrolyt, einen Polymerbinder und ein Lösungsmittel, auf das Substrat (30),
- Trocknen des mit dem Schlicker (32) beschichteten Substrats (34), wobei eine getrocknete Beschichtung (82) ausgebildet wird, und
- Sintern der getrockneten Beschichtung (82) des Substrats (30), wobei die Beschichtung (82) durch das Einkoppeln einer energiereichen Strahlung (68) eines Oberflächenemitters (40, 42, 44, 46, 48, 50, 64, 66) auf eine Prozesstemperatur T_{P} zum Sintern der Beschichtung (82) erhitzt wird.

2. Verfahren zur Herstellung eines Feststoffseparators (80) für eine Batteriezelle nach Anspruch 1, **dadurch gekennzeichnet, dass** der Oberflächenemitter (40, 42, 44, 46, 48, 50) eine VCSEL-Matrix (66) umfasst.

3. Verfahren zur Herstellung eines Feststoffseparators (80) für eine Batteriezelle nach Anspruch 1 oder 2, **dadurch gekennzeichnet, dass** das Substrat (30) als Band- oder Folienmaterial (36) zugeführt wird.

4. Verfahren zur Herstellung eines Feststoffseparators (80) für eine Batteriezelle nach einem der Ansprüche 1 bis 3, wobei beide Oberflächen des Substrats (30) mit einem Schlicker (32) beschichtet werden, sodass an beiden Oberflächen des Substrats ein keramischer Feststoffseparator (80) ausgebildet wird.

5. Verfahren zur Herstellung eines Feststoffseparators (80) für eine Batteriezelle nach einem der Ansprüche 1 bis 4, wobei der Feststoffseparator (80) stoffschlüssig mit dem Substrat (30) verbunden wird.

6. Verfahren zur Herstellung eines Feststoffseparators (80) für eine Batteriezelle nach Anspruch 5, wobei das Substrat (30) mit der gesinterten Beschichtung (38) nach dem Sinterprozess kurzfristig über eine Schmelztemperatur erhitzt wird, wodurch das Substrat (30) den Feststoffseparator (80) zumindest partiell umklammert und/oder der Feststoffseparator (80) von dem aufgeschmolzenen Substrat (30) zumindest partiell eingeschlossen wird.

7. Verfahren zur Herstellung eines Feststoffseparators (80) für eine Batteriezelle nach einem der Ansprüche 1 bis 6, wobei ein Trocknungsprozess, ein Sinterprozess und/oder ein Abkühlprozess des Feststoffseparators (80) unter einer Prozessatmosphäre erfolgen.

8. Verfahren zur Herstellung eines Feststoffseparators (80) für eine Batteriezelle nach einem der Ansprüche 1 bis 7, wobei das beschichtete Substrat (34) mittels eines Oberflächenemitters (40, 42, 44, 46, 48, 50, 64, 66) getrocknet wird.

9. Verfahren zur Herstellung eines Feststoffseparators (80) für eine Batteriezelle nach einem der Ansprüche 1 bis 8, wobei eine Schichtdicke der getrockneten Beschichtung (82) in einem Bereich von 0,1 µm bis 50 µm liegt.

10. Verfahren zur Herstellung eines Feststoffseparators (80) für eine Batteriezelle nach einem der Ansprüche 1 bis 9, wobei eine Wellenlänge der Strahlung (68) des Oberflächenemitters (40, 42, 44, 46, 48, 50, 64, 66) im Bereich von 10 nm bis 20000 nm liegt.

11. Verfahren zur Herstellung eines Feststoffseparators (80) für eine Batteriezelle nach einem der Ansprüche 1 bis 10, wobei das Substrat (30) eine Kupferfolie, eine Nickelfolie oder eine Verbundfolie aus zwei oder mehreren metallischen Schichten ist.

12. Feststoffseparator (80) für eine Batteriezelle, hergestellt mit einem Verfahren nach einem der Ansprüche 1 bis 11 ist.

13. Vorrichtung zur Herstellung eines Feststoffseparators (80) für eine Batteriezelle, umfassend
- Mittel (12, 14) zum Zuführen eines Substrats (30),
- Mittel zum Auftragen eines Schlickers (32) eines Feststoffseparators auf das Substrat (30),
- Mittel (40, 42, 44, 46, 48, 50, 64, 66) zum Trocknen des mit dem Schlicker (32) beschichteten Substrats (30), wobei eine getrocknete Beschichtung (82) ausgebildet wird,
- Mittel (40, 42, 44, 46, 48, 50, 64, 66) zum Sintern der getrockneten Beschichtung (82) des Substrats (30), wobei die Mittel (40, 42, 44, 46, 48, 50, 64, 66) mindestens einen Oberflächenemitter (40, 42, 44, 46, 48, 50, 64, 66) zur Aufheizung der getrockneten Beschichtung (82) auf eine Prozesstemperatur T_{P} zum Sintern der Beschichtung (82) aufweisen.

14. Vorrichtung zur Herstellung eines Feststoffseparators (80) für eine Batteriezelle nach Anspruch 13, wobei die Mittel (40, 42, 44, 46, 48, 50, 64, 66) zum Trocknen und/oder Sintern der Beschichtung des Substrats (30) mehrere hintereinander geschaltete Oberflächenemitter (40, 42, 44, 46, 48, 50) umfassen.

15. Vorrichtung zur Herstellung eines Feststoffseparators (80) für eine Batteriezelle nach Anspruch 13 oder 14, wobei die Mittel (40, 42, 44, 46, 48, 50, 64, 66) zum Trocknen und/oder Sintern der Beschichtung des Substrats (30) mehrere Oberflächenemitter (40, 42, 44, 46, 48, 50) umfassen, wobei zumindest zwei der Oberflächenemitter (40, 42, 44, 46, 48, 50) an unterschiedlichen Seiten des Substrats (30) angeordnet sind.

## Claims

1. A method for producing a solid separator (80) for a battery cell, comprising:
- supplying a substrate (30),
- applying a slurry (32) of a ceramic solid separator, comprising a solid electrolyte, a polymer binder, and a solvent, onto the substrate (30),
- drying the substrate (34) coated with the slurry (32), wherein a dried coating (82) is formed, and
- sintering the dried coating (82) of the substrate (30), wherein the coating (82) is heated by coupling high-energy radiation (68) from a surface emitter (40, 42, 44, 46, 48, 50, 64, 66) to a process temperature Tp for sintering the coating (82).

2. The method for producing a solid separator (80) for a battery cell according to Claim 1, **characterized in that** the surface emitter (40, 42, 44, 46, 48, 50) comprises a VCSEL matrix (66).

3. The method for producing a solid separator (80) for a battery cell according to Claim 1 or 2, **characterized in that** the substrate (30) is supplied as a strip material or foil material (36).

4. The method for producing a solid separator (80) for a battery cell according to any one of the Claims 1 or 3, wherein both surfaces of the substrate (30) are coated with a slurry (32) such that a ceramic solid separator (80) is formed on both surfaces of the substrate.

5. The method for producing a solid separator (80) for a battery cell according to any one of the Claims 1 or 4, wherein the solid separator (80) is integrally connected to the substrate (30).

6. The method for producing a solid separator (80) for a battery cell according to Claim 5, wherein, after the sintering process, the substrate (30) with the sintered coating (38) is briefly heated to above a melting point, whereby the substrate (30) at least partially clasps around the solid separator (80) and/or the solid separator (80) is at least partially enclosed by the melted substrate (30).

7. The method for producing a solid separator (80) for a battery cell according to any one of the Claims 1 to 6, wherein a drying process, a sintering process and/or a cooling process of the solid separator (80) are performed under a process atmosphere.

8. The method for producing a solid separator (80) for a battery cell according to any one of the Claims 1 or 7, wherein the coated substrate (34) is dried by means of a surface emitter (40, 42, 44, 46, 48, 50, 64, 66).

9. The method for producing a solid separator (80) for a battery cell according to any one of the Claims 1 or 8, wherein a coat thickness of the dried coating (82) is in a range of 0.1 µm to 50 µm.

10. The method for producing a solid separator (80) for a battery cell according to any one of the Claims 1 or 9, wherein a wavelength of the radiation (68) of the surface emitter (40, 42, 44, 46, 48, 50, 64, 66) is in the range of 10 nm to 20000 nm.

11. The method for producing a solid separator (80) for a battery cell according to any one of the Claims 1 or 10, wherein the substrate (30) is a copper foil, a nickel foil or a composite foil made of two or more metallic layers.

12. A solid separator (80) for a battery cell, produced with a method according to any one of the Claims 1 to 11.

13. A device for producing a solid separator (80) for a battery cell,
comprising
- means (12, 14) for supplying a substrate (30),
- means for applying a slurry (32) of a solid separator onto the substrate (30),
- means (40, 42, 44, 46, 48, 50, 64, 66) for drying the substrate (30) coated with the slurry (32), wherein a dried coating (82) is formed,
- means (40, 42, 44, 46, 48, 50, 64, 66) for sintering the dried coating (82) of the substrate (30), wherein the means (40, 42, 44, 46, 48, 50, 64, 66) have at least one surface emitter (40, 42, 44, 46, 48, 50, 64, 66) for heating the dried coating (82) to a process temperature Tp for sintering the coating (82).

14. The device for producing a solid separator (80) for a battery cell according to Claim 13, wherein the means (40, 42, 44, 46, 48, 50, 64, 66) for drying and/or sintering the coating of the substrate (30) comprise multiple sequentially switched surface emitters (40, 42, 44, 46, 48, 50).

15. The device for producing a solid separator (80) for a battery cell according to Claim 13 or 14, wherein the means (40, 42, 44, 46, 48, 50, 64, 66) for drying and/or sintering the coating of the substrate (30) comprise multiple surface emitters (40, 42, 44, 46, 48, 50), wherein at least two of the surface emitters (40, 42, 44, 46, 48, 50) are arranged on different sides of the substrate (30).

## Revendications

1. Procédé destiné à fabriquer un séparateur solide (80) pour un élément de batterie, comprenant :
- alimenter un substrat (30),
- appliquer une barbotine (32) d'un séparateur solide en céramique, comprenant un électrolyte solide, un liant polymère et un solvant, sur le substrat (30),
- sécher le substrat (34) revêtu de la barbotine (32), un revêtement séché (82) étant formé, et
- fritter le revêtement séché (82) du substrat (30), le revêtement (82) étant chauffé à une température de processus T_{P} destinée à fritter le revêtement (82) par le couplage d'un rayonnement à haute énergie (68) d'un émetteur de surface (40, 42, 44, 46, 48, 50, 64, 66).

2. Procédé de fabrication d'un séparateur solide (80) pour un élément de batterie selon la revendication 1, **caractérisé en ce que** l'émetteur de surface (40, 42, 44, 46, 48, 50) comprend une matrice VCSEL (66).

3. Procédé de fabrication d'un séparateur solide (80) pour un élément de batterie selon la revendication 1 ou 2, **caractérisé en ce que** le substrat (30) est alimenté sous forme de matériau en bande ou en feuille (36).

4. Procédé de fabrication d'un séparateur solide (80) pour un élément de batterie selon l'une quelconque des revendications 1 à 3, dans lequel les deux surfaces du substrat (30) sont revêtues d'une barbotine (32) de telle sorte que, sur les deux surfaces du substrat, un séparateur solide en céramique (80) soit formé.

5. Procédé de fabrication d'un séparateur solide (80) pour un élément de batterie selon l'une quelconque des revendications 1 à 4, dans lequel le séparateur solide (80) est relié au substrat (30) par complémentarité de matière.

6. Procédé de fabrication d'un séparateur solide (80) pour un élément de batterie selon la revendication 5, dans lequel le substrat (30) avec le revêtement fritté (38) est brièvement chauffé au-dessus d'une température de fusion après le processus de frittage, ce qui permet au substrat (30) d'enfermer au moins partiellement le séparateur solide (80) et/ou au séparateur solide (80) d'être entouré au moins partiellement par le substrat fondu (30).

7. Procédé de fabrication d'un séparateur solide (80) pour un élément de batterie selon l'une quelconque des revendications 1 à 6, dans lequel un processus de séchage, un processus de frittage et/ou un processus de refroidissement du séparateur solide (80) ont lieu sous une atmosphère de processus.

8. Procédé de fabrication d'un séparateur solide (80) pour un élément de batterie selon l'une quelconque des revendications 1 à 7, dans lequel le substrat revêtu (34) est séché à l'aide d'un émetteur de surface (40, 42, 44, 46, 48, 50, 64, 66).

9. Procédé de fabrication d'un séparateur solide (80) pour un élément de batterie selon l'une quelconque des revendications 1 à 8, dans lequel une épaisseur de couche du revêtement séché (82) est comprise dans une plage de 0,1 µm à 50 µm.

10. Procédé de fabrication d'un séparateur solide (80) pour un élément de batterie selon l'une quelconque des revendications 1 à 9, dans lequel une longueur d'onde du rayonnement (68) de l'émetteur de surface (40, 42, 44, 46, 48, 50, 64, 66) est comprise dans la plage de 10 nm à 20 000 nm.

11. Procédé de fabrication d'un séparateur solide (80) pour un élément de batterie selon l'une quelconque des revendications 1 à 10, dans lequel le substrat (30) est une feuille de cuivre, une feuille de nickel ou une feuille composite constituée de deux ou plusieurs couches métalliques.

12. Séparateur solide (80) pour un élément de batterie, fabriqué par un procédé selon l'une quelconque des revendications 1 à 11.

13. Dispositif destiné à fabriquer un séparateur solide (80) pour un élément de batterie, comprenant
- des moyens (12, 14) destinés à alimenter un substrat (30),
- des moyens destinés à appliquer une barbotine (32) d'un séparateur solide sur le substrat (30),
- des moyens (40, 42, 44, 46, 48, 50, 64, 66) destinés à sécher le substrat (30) revêtu de la barbotine (32), un revêtement séché (82) étant formé,
- des moyens (40, 42, 44, 46, 48, 50, 64, 66) destinés à fritter le revêtement séché (82) du substrat (30), dans lequel les moyens (40, 42, 44, 46, 48, 50, 64, 66) présentent au moins un émetteur de surface (40, 42, 44, 46, 48, 50, 64, 66) pour chauffer le revêtement séché (82) à une température de processus T_{P} destinée à fritter le revêtement (82).

14. Dispositif de fabrication d'un séparateur solide (80) pour un élément de batterie selon la revendication 13, dans lequel les moyens (40, 42, 44, 46, 48, 50, 64, 66) destinés à sécher et/ou à fritter le revêtement du substrat (30) comprennent plusieurs émetteurs de surface (40, 42, 44, 46, 48, 50) connectés les uns derrière les autres.

15. Dispositif de fabrication d'un séparateur solide (80) pour un élément de batterie selon la revendication 13 ou 14, dans lequel les moyens (40, 42, 44, 46, 48, 50, 64, 66) destinés à sécher et/ou à fritter le revêtement du substrat (30) comprennent plusieurs émetteurs de surface (40, 42, 44, 46, 48, 50), au moins deux des émetteurs de surface (40, 42, 44, 46, 48, 50) étant disposés sur des côtés différents du substrat (30).
